# FASCICULE DE BREVET EUROPEEN

(11) **EP 0 826 582 B1**
(45) Date de publication et mention de la délivrance du brevet: **12.02.2003**
(21) Numéro de dépôt: 97410091.9
(22) Date de dépôt: 22.08.1997
(51) Int. Cl.: B62H 3/02

(54) **Dispositif de parcage de véhicules notamment de cycles**
Vorrichtung zum Abstellen von Fahrzeugen, insbesondere von Fahrrädern
Vehicle parking rack,in particular for bicycle

(30) Priorité: 30.08.1996 FR 9610702
(43) Date de publication de la demande: 04.03.1998
(73) Titulaire: Bonfils, André, 74000 Annecy (FR)
(72) Inventeur: Bonfils, André, 74000 Annecy (FR)
(74) Mandataire: Gasquet, Denis

(56) Documents cités:
- EP-A- 0 614 798
- DE-U- 29 505 264
- NL-A- 9 300 615
- US-A- 3 976 200

## Description

La présente invention concerne un dispositif de parcage ou de stockage de véhicules, notamment de cycles.

On connaît de tels dispositifs comme, par exemple, ceux du type parc à bicyclette classique, fixés ou ancrés dans le sol et qui comprennent un ensemble de tiges métalliques en forme de quart de cercle disposés parallèlement de manière à former des logements pour les roues desdits cycles. De même, d'autres dispositifs sont constitués, par exemple, par des arceaux métalliques verticaux ancrés dans le sol contre lesquels on peut poser la bicyclette ou la motocyclette en appui, lesdits arceaux permettant en outre de cadenasser le cycle.

Il existe, bien évidemment, d'autres dispositifs divers et variés. Cependant, l'ensemble de ces dispositifs présente des inconvénients liés soit à leur encombrement, soit à leur inadaptation aux cycles actuels de type vélo tout terrain, plus communément appelés "VTT" ou "VTC" qui possèdent un guidon droit de grande dimension. De plus, lesdits dispositifs connus sont souvent mal adaptés en matière de sécurité contre le vol et relativement fragiles face à la recrudescence actuelle des dégradations occasionnées sur les équipements et autres matériels des diverses collectivités et municipalités, par exemple.

Le brevet américain N° 3,976,200 divulgue un dispositif de parcage de cycles qui comprend un support principal ayant la forme d'un profilé sur lequel sont fixés des moyens de parcage. Selon ce dispositif antérieur il est prévu que les supports pour les cycles soient constituer par des broches horizontales traversant le profilé du support principal, leur fixation étant assurée notamment par un écrou accessible. On a compris, que la réalisation antérieure, n'est pas satisfaisante, d'un point de vue mécanique et sa fiabilité laisse à désirée.

La présente invention a pour but de remédier aux divers inconvénients précités en proposant un dispositif de parcage ou de stockage de véhicule et notamment de cycle, robuste, pratique, sûr et pouvant être adapté aux différents types de cycles en fonction des besoins spécifiques.

Ainsi, le dispositif de parcage de véhicules notamment de cycles selon l'invention est du type comprenant au moins un support principal destiné à porter des moyens de parcage de véhicules et/ou des moyens de cadenassage, et est caractérisé en ce que ledit support principal comporte au moins un rail transversal de maintien présentant une enceinte longitudinale à l'intérieur de laquelle sont fixés les moyens de parcage et/ou les moyens de cadenassage.

Selon une autre caractéristique, le rail transversal de maintien comporte une fente longitudinale s'étendant sur l'ensemble de sa longueur.

Selon une caractéristique complémentaire, les moyens de parcage et/ou les moyens de cadenassage comportent chacun à une de leurs extrémités un organe de fixation destiné à être fixé à l'intérieur de l'enceinte longitudinale.

Selon un mode de réalisation, les organes de fixation des moyens de parcage et/ou des moyens de cadenassage sont constitués par une platine de forme sensiblement parallélépipédique dont la base inférieure est de largeur et de longueur respectivement supérieure à la largeur de la fente longitudinale.

En outre, selon une autre caractéristique, le dispositif de parcage de véhicules selon l'invention comporte des moyens de positionnement et de verrouillage destinés à positionner et à verrouiller les organes de fixation des moyens de parcage et/ou de cadenassage à l'intérieur de l'enceinte longitudinale.

Selon un mode de réalisation, les moyens de positionnement et de verrouillage sont constitués par des cales disposées à l'intérieur de l'enceinte longitudinale du rail et destinées à coopérer avec les organes de fixation entre lesquelles elles sont mises en place.

Selon un mode de réalisation préféré de l'invention, les moyens de parcage de véhicules sont constitués par des supports de guidon possédant une partie allongée s'étendant sensiblement horizontalement dans un plan perpendiculaire à l'axe longitudinal du rail de maintien, ladite partie allongée comportant sur sa face supérieure au moins un évidement ou une encoche destinée à coopérer avec une partie du guidon d'un cycle.

Selon une caractéristique complémentaire, les moyens de cadenassage sont constitués par des câbles munis à une de leurs extrémités d'un organe de fixation destiné à être fixé dans l'enceinte longitudinale et à son autre extrémité d'une boucle de cadenassage.

Selon un mode de réalisation, le support principal du dispositif de parcage est constitué par deux poteaux de soutien latéraux destinés à être ancrés ou scellés sur le sol ou dans un mur et entre lesquels est fixé le rail transversal de maintien muni des moyens de parcage et/ou des moyens de cadenassage grâce à un dispositif de verrouillage.

D'autres caractéristiques et avantages de l'invention se dégageront de la description qui va suivre en regard des dessins annexés qui ne sont donnés qu'à titre d'exemples non limitatifs.

Les figures 1 à 8 illustrent le mode de réalisation préféré du dispositif de parcage de véhicules.

La figure 1 est une vue en perspective du dispositif de parcage.

La figure 2 est une vue similaire à la figure 1 illustrant le parcage des cycles.

La figure 3 est une vue en perspective d'une portion du rail transversal de maintien et des moyens de parcage.

La figure 4 est une vue en coupe dans le plan (P) du rail de maintien et des moyens de parcage.

La figure 5 est une vue en coupe longitudinale selon AA d'une portion du rail de maintien munie des moyens de positionnement et de verrouillage des moyens de parcage.

La figure 6 illustre selon une coupe similaire à la figure 4 les moyens de cadenassage.

La figure 7 illustre un premier type de support de guidon en coupe dans le plan (P).

La figure 8 illustre un deuxième type de support de guidon en coupe dans le plan (P).

La figure 9 illustre un perfectionnement relatif au support de guidon en coupe dans le plan (P).

La figure 10 illustre en vue latérale une variante d'utilisation du dispositif de parcage de véhicules consistant à ancrer son support principal contre un mur.

Le dispositif de parcage ou de stockage de véhicule selon l'invention, désigné sous la référence générale (1), est du type comprenant au moins un support principal (2) destiné à porter des moyens de parcage (3) des véhicules et/ou des moyens de cadenassage (4). Il va de soi que ce dispositif peut être utilisé pour une large gamme de véhicules en fonction de la nature des moyens de parcage (3) montés sur le support (2). Il trouve avantageusement son application dans le parcage des cycles (24) comme les bicyclettes, scooters et autres vélomoteurs pour lesquels l'invention sera décrite dans les différents modes de réalisation, mais pourrait également être utilisé pour parquer d'autres véhicules comme, par exemple, les jet-skis ou autres en modifiant la forme desdits moyens de parcage (3).

On entendra par moyens de cadenassage par exemple tous dispositifs ou moyens pouvant être utilisés pour cadenasser ou pour aider à cadenasser le véhicule.

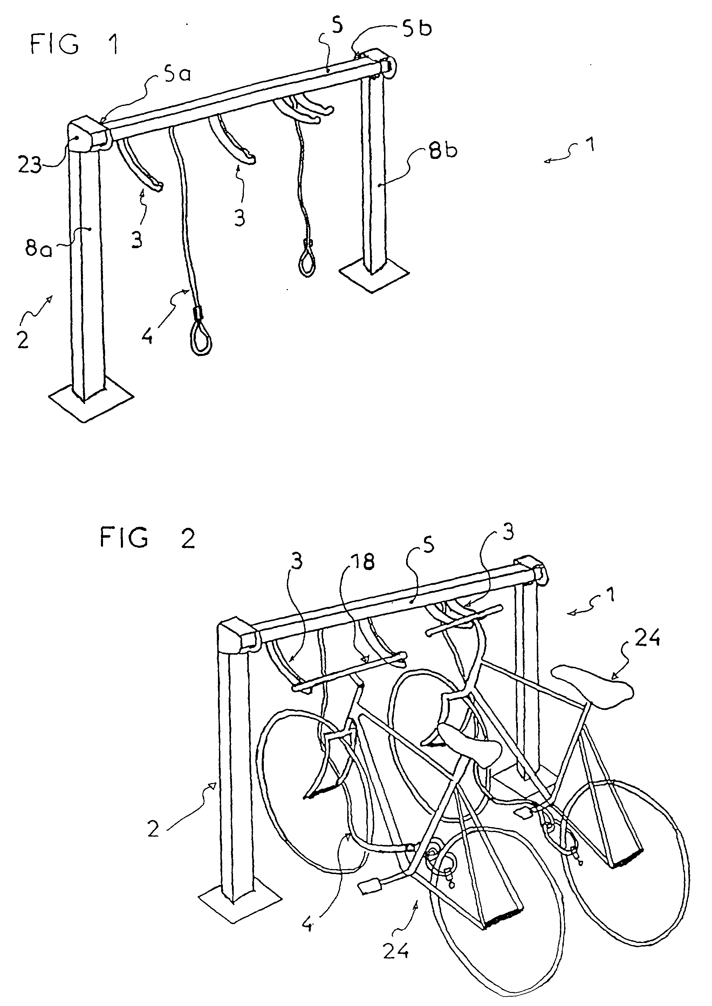

Selon l'invention, le support principal (2) comporte au moins un rail de maintien (5) à l'intérieur duquel sont fixés par un dispositif de fixation les moyens de parcage (3) et/ou les moyens de cadenassage (4) des véhicules, tel qu'illustré figures 1 et 2.

Ledit dispositif de fixation est composé, d'une part, d'organes de fixation (6, 21) solidaires des moyens de parcage (3) et/ou des moyens de cadenassage (4) et, d'autre part, de moyens de positionnement et de verrouillage (7) destinés à permettre le positionnement et le verrouillage des organes de fixation des différents moyens de parcage (3) et/ou de cadenassage (4) selon l'axe longitudinal (XX') à l'intérieur du rail transversal de maintien (5).

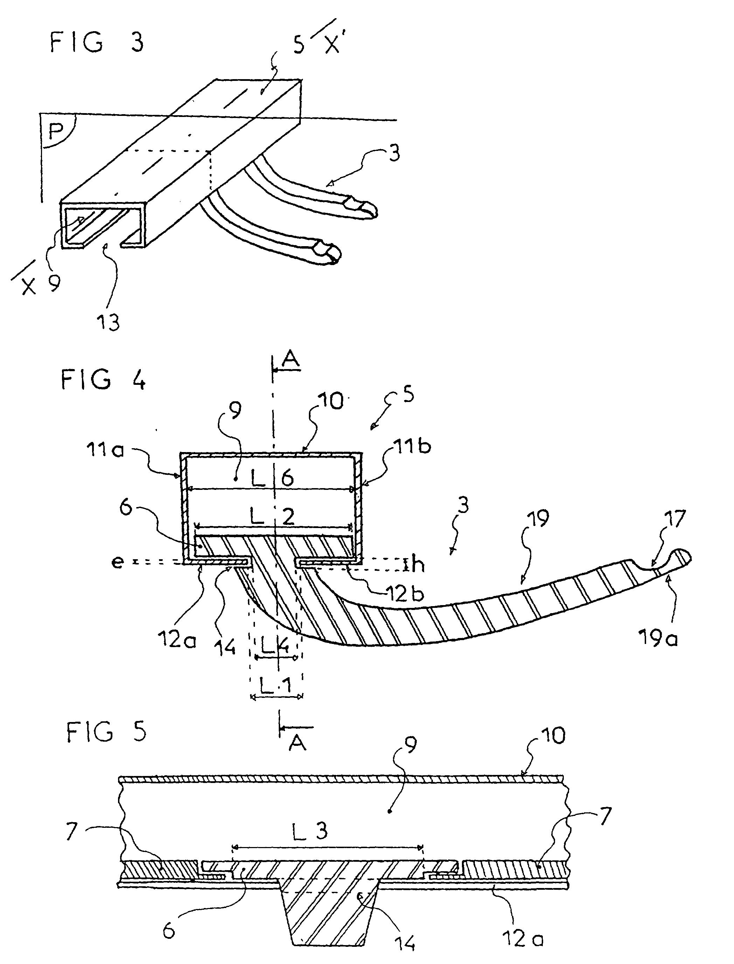

Selon le mode de réalisation préféré de l'invention, le support principal (2) est constitué par un portique comportant deux poteaux latéraux de soutien (8a, 8b) destinés à être ancrés ou scellés sur le sol ou dans un mur et entre lesquels est disposé sensiblement horizontalement le rail transversal de maintien (5). Ledit rail est constitué par une enceinte longitudinale (9) délimitée par une paroi supérieure (10) et deux parois latérales (11a, 11b), lesdites parois latérales étant prolongées chacune par une portion de paroi inférieure (12a, 12b) de manière à former une fente (13) de largeur (L1), ladite fente s'étendant longitudinalement selon l'axe (XX') d'une extrémité à l'autre de la paroi inférieure (12a, 12b) du rail, tel qu'illustré figures 3 et 4. Ainsi, la section transversale dudit rail est carrée ou rectangulaire et comporte une ouverture partielle située avantageusement sur la paroi inférieure. Il va de soi que ledit rail de maintien (5) pourrait posséder une section transversale différente comme, par exemple, circulaire ou triangulaire, sans pour autant sortir du domaine de protection de l'invention. De même, la fente (13) dudit rail pourrait être placée longitudinalement sur ses parois latérales ou sur sa paroi supérieure, par exemple.

Les moyens de parcage (5) des véhicules comportent chacun à une de leur extrémité un organe de fixation (6) destiné à être logé puis positionné et verrouillé à l'intérieur de l'enceinte longitudinale (9) du rail de maintien (5). Ledit organe de fixation est selon ce mode de réalisation préféré, constitué par une platine (6) de forme sensiblement parallélépipédique dont la largeur (L2) et la longueur (L3) de sa base inférieure sont respectivement supérieures à la largeur (L1) de la fente, la largeur (L2) étant ajustée à la largeur (L6) de l'enceinte longitudinale (9), comme le montre les figures 4 et 5.

Ainsi, une fois mis en place à l'intérieur du rail de maintien (5), ledit organe de fixation (6) prolongeant avantageusement les moyens de parcage proprement dit ne peut être extrait de l'enceinte longitudinale (9) par la fente (13) située sur la paroi inférieure dudit rail. Notons que dans ce mode de réalisation préféré chaque moyen de parcage (3) et son organe de fixation (6) respectif ne constitue qu'une seule et même pièce qui peut, par exemple, être avantageusement réalisé en fonte d'aluminium. Ladite pièce comporte entre la platine de forme sensiblement parallélépipédique (6) et le moyen de parcage proprement dit un étranglement latéral (14) de sa section, illustré figure 4. La section au niveau de l'étranglement est de largeur (L4) légèrement inférieure à la largeur (L1) de la fente (13) et est destinée à coopérer de part et d'autre avec les portions de parois inférieures (12a, 12b) du rail. En outre, la hauteur (h) dudit étranglement est très légèrement supérieure à l'épaisseur (e) desdites portions de paroi inférieures de manière à empêcher le basculement desdits moyens de parcage (3) dans un plan transversal perpendiculaire au rail (5). Ainsi, l'étranglement (14) est ajusté aux dimensions de la fente (13) de manière à limiter au maximum le jeu en basculement des moyens de parcage (3).

Selon le mode de réalisation préféré de l'invention, les moyens de parcage (3) sont destinés au parcage des cycles et sont constitués par des supports de guidon (15a, 15b). Lesdits supports s'étendent légèrement vers le bas (BA) à l'aplomb de leur étranglement de section (14), puis sont recourbés de manière à constituer une partie allongée (19) qui s'étend sensiblement horizontalement vers l'extérieur du rail dans un plan (P) orthogonal à l'axe longitudinal (XX') dudit rail. Notons, de plus, que la surface de la section desdits supports de guidon (15a, 15b) diminue au fur et à mesure qu'ils s'étendent vers l'extérieur du rail dans le plan (P). Chaque support de guidon (15a, 15b) possède sur sa paroi supérieure sensiblement à son extrémité (19a) un évidement avantageusement arrondi ou une encoche (17) dans laquelle est destinée à venir se loger une partie du guidon (18) d'un cycle (24), telle que sa poignée ou son bras. Ainsi, selon le mode de réalisation préféré, les supports de guidon (15a, 15b) constituant les moyens de parcage sont montés par paire dans le rail transversal de maintien (5) afin de pouvoir maintenir les cycles (24) par deux parties opposées de leur guidon (18), tel qu'illustré figure 2.

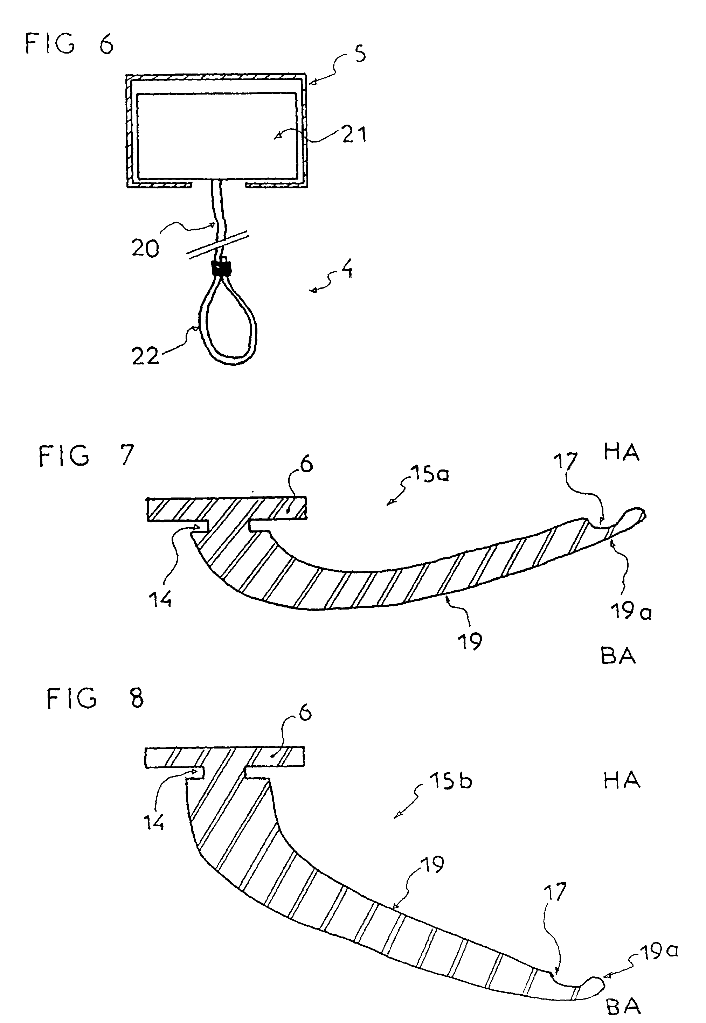

De plus selon le mode de réalisation préféré, les supports de guidon (15a, 15b) peuvent être de deux types en fonction de l'inclinaison de leur partie allongée (19) qui s'étend dans le plan (P) vers l'extérieur du rail (5). Selon un premier type (15a) illustré figure 7, ledit support (15a) possède une partie allongée (19) qui s'étend légèrement vers le haut (HA) et l'extérieur du rail, tandis que, selon un deuxième type (15b) ladite partie allongée (19) s'étend légèrement vers le bas (BA) comme le montre la figure 8. Il va de soi que l'on pourrait utiliser sur un même rail de maintien (5) plus de deux types de supports en faisant varier l'inclinaison de leur partie allongée (19) sans pour autant sortir du domaine de protection de l'invention. Bien entendu, chaque cycle est destiné à être parqué sur une paire de supports de même type de manière à permettre au guidon (18) du cycle (24) d'être disposé horizontalement.

Ainsi, selon l'invention, on dispose dans le rail des paires de supports du même type tout en alternant avantageusement le type des supports à chaque paire contiguë. Une telle disposition permet avantageusement, en alternant la hauteur du plan horizontal dans lequel va être maintenu le guidon (18) par les encoches (17) de chaque paire de support contiguë, de pouvoir rapprocher entre eux les cycles que l'on veut parquer sans que leurs guidons interfèrent et ainsi d'augmenter le nombre de cycles que l'on peut parquer sur un même rail transversal de maintien (5). Il va de soi que cet effet peut être obtenu en utilisant des supports dont la partie allongée (19) conserve la même inclinaison mais en modifiant par exemple la position de l'encoche sur lesdits supports, afin de décaler dans un même plan sensiblement horizontal la position du guidon de deux cycles parqués côte à côte.

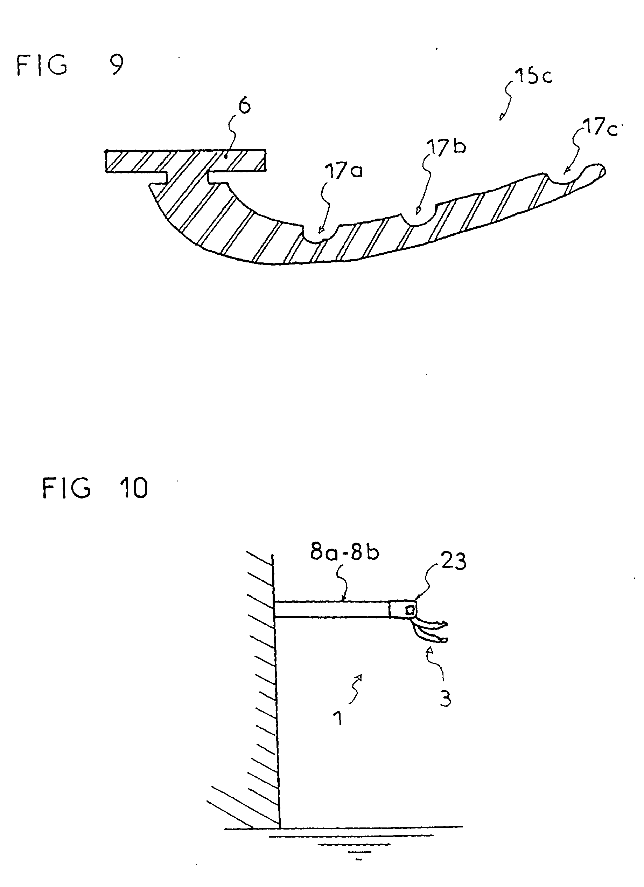

Selon une variante illustrée figure 9, les paires de supports de guidon (15c) disposées sur le rail de maintien (5) sont identiques et chaque support possède au moins deux encoches (17a, 17b, 17c) situées sur sa paroi supérieure, lesdites encoches étant suffisamment distantes entre elles afin de pouvoir alterner la position des guidons de deux cycles parqués côte à côte sans être gênés par leurs accessoires comme, par exemple, les poignées de frein ou les leviers de changement de vitesse.

Selon le mode de réalisation préféré de l'invention, les moyens de positionnement et de verrouillage (7) destinés à bloquer en position les organes de fixation (6) des moyens de parcage (3) sont constitués par un ensemble de cales (7) disposées successivement d'une extrémité (5a) à l'autre (5b) du rail de maintien (5) à l'intérieur de l'enceinte longitudinale (9) dudit rail entre les organes de fixation (6, 21). Lesdites cales sont de forme parallélépipédique, de largeur ajustée à la largeur (L6) de l'enceinte longitudinale (9) et possèdent avantageusement à chacune de leurs extrémités une découpe particulière destinée à coopérer avec une découpe de forme complémentaire située sur une extrémité de la platine parallélépipédique (6) constituant l'organe de fixation des moyens de parcage, comme le montre la figure 5. Le positionnement des moyens de parcage (3) est ainsi fonction de la longueur des cales (7) disposées entre eux et peut être alors avantageusement choisi lors du montage d'un tel dispositif en fonction des désirs de l'utilisateur. Notons, de plus, que lesdites cales (7) s'étendent sur l'ensemble de la longueur de la fente (13) du rail de manière à obstruer celle-ci afin d'interdire l'accès à l'enceinte longitudinale (9) du rail (5) depuis l'extérieur.

Selon un perfectionnement illustré figure 1, 2 et 6, ledit dispositif est pourvu de moyens de cadenassage (4) constitués par des câbles (20) avantageusement en acier gainé. Lesdits moyens de cadenassage (4) possèdent à leur extrémité supérieure un organe de fixation (21) destiné à être mis en place puis verrouillé à l'intérieur de l'enceinte longitudinale (9) du rail (5) de manière similaire à la mise en place et au verrouillage des organes de fixation (6) des moyens de parcage (3). Selon ce perfectionnement du mode de réalisation préféré, lesdits câbles (20) sont disposés entre les supports de guidon (15a ou 15b) de chaque paire de supports destinée à parquer un cycle mais peuvent également être positionnés entres lesdites paires. Ils sont munis à leur extrémité inférieure d'une boucle de cadenassage (22) avec laquelle l'utilisateur pourra solidariser son cycle grâce à son antivol personnel après avoir fait passer ledit câble à l'intérieur de la roue avant, du cadre et de la roue arrière, par exemple. Notons que la longueur des câbles (20) est avantageusement comprise entre 1m et 5m et est avantageusement égale à 2m 50 de manière à permettre à l'utilisateur du dispositif de pouvoir cadenasser l'intégralité des éléments constitutifs de sa bicyclette tels que la roue avant et la roue arrière par exemple, également pour des tandems par exemple.

Ainsi, selon l'invention, le dispositif de parcage (1) de véhicule est monté de manière à positionner et à fixer à l'intérieur du rail (5) les différents organes de fixation (6, 21) des moyens de parcage (3) et des moyens de cadenassage (4) à l'aide de moyens de positionnement et de verrouillage (7) en les faisant coulisser le long de la fente (13) depuis une des extrémités libres (Sa, 5b) dudit rail. Le rail (5) est ensuite monté entre les deux poteaux latéraux de soutien (8a, 8b) de manière à obstruer lesdites extrémités libres (5a, 5b) empêchant ainsi le mouvement des cales (7) constituant les moyens de positionnement. Selon le mode de réalisation préféré, le rail de maintien (5) est fixé aux poteaux de soutien grâce à un dispositif de verrouillage (23) de type connu en soi qui est avantageusement réversible, c'est-à-dire permettant le déverrouillage dudit rail à l'aide d'une clé spéciale afin de permettre le remplacement, par exemple, d'un moyen de parcage défectueux ou abîmé. Le dispositif de parcage est alors prêt à être utilisé en scellant ou en ancrant les poteaux de soutien dans le sol.

Selon une variante d'exécution illustrée figure 10, lesdits poteaux de soutien peuvent, par exemple, être ancrés sur un mur extérieur de bâtiment.

Selon une deuxième variante d'exécution non représentée, les supports de guidon (15a, 15b) peuvent être mis en place à l'intérieur de l'enceinte longitudinale du rail de façon à ce que leur partie allongée (19) s'étende vers l'extérieur alternativement des deux côtés des parois latérales du rail de manière à pouvoir obtenir un parcage bilatéral des cycles, c'est-à-dire un parcage des deux côtés du rail.

Il va de soi qu'un même support principal d'un dispositif de parcage pourrait comprendre plusieurs rails de maintien sans pour autant sortir du champs de protection de l'invention.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Dispositif de parcage de véhicules (1) notamment de cycles (24) du type comprenant au moins un support principal (2) destiné à porter des moyens de parcage de véhicules (3) et/ou des moyens de cadenassage (4), ledit support principal (2) comportant au moins un rail transversal de maintien (5) présentant une enceinte longitudinale (9) à l'intérieur de laquelle sont fixés les moyens de parcage (3) et/ou les moyens de cadenassage (4), **caractérisé en ce que** le rail transversal de maintien (5) comporte une fente longitudinale (13) de largeur (L1) s'étendant sur l'ensemble de sa longueur, et **en ce que** lesdits moyens de parcage et/ou de cadenassage traversent cette fente.

2. Dispositif de parcage de véhicules (1) selon l'une quelconque des revendications précédentes, **caractérisé en ce que** les moyens de parcage (3) et/ou les moyens de cadenassage (4) comportent chacun à une de leurs extrémités un organe de fixation (6, 21) destiné à être fixé à l'intérieur de l'enceinte longitudinale (9).

3. Dispositif de parcage de véhicules (1) selon la revendication 2, **caractérisé en ce que** les organes de fixation (6, 21) des moyens de parcage (3) et/ou des moyens de cadenassage (4) sont constitués par une platine de forme sensiblement parallélépipédique (6) dont la base inférieure est de largeur (L2) et de longueur (L3) respectivement supérieure à la largeur (L1) de la fente longitudinale (9).

4. Dispositif de parcage de véhicules (1) selon la revendication 2 ou 3, **caractérisé en ce qu'**il comporte des moyens de positionnement et de verrouillage (7) destinés à positionner et à verrouiller les organes de fixation (6, 21) des moyens de parcage (3) et/ou de cadenassage (4) à l'intérieur de l'enceinte longitudinale (9).

5. Dispositif de parcage de véhicules (1) selon la revendication 4, **caractérisé en ce que** les moyens de positionnement et de verrouillage sont constitués par des cales (7) disposées à l'intérieur de l'enceinte longitudinale (9) du rail (5) et destinées à coopérer avec les organes de fixation (6, 21) entre lesquelles elles sont mises en place.

6. Dispositif de parcage de véhicules (1) selon l'une quelconque des revendications précédentes, **caractérisé en ce que** les moyens de parcage (3) de véhicules sont constitués par des supports de guidon (15, 15a, 15b) possédant une partie allongée (19) s'étendant sensiblement horizontalement dans un plan perpendiculaire à l'axe longitudinal (XX') du rail de maintien (5), ladite partie allongée (19) comportant sur sa face supérieure au moins un évidement ou une encoche (17) destinée à coopérer avec une partie du guidon (18) d'un cycle (24).

7. Dispositif de parcage de véhicules (1) selon l'une quelconque des revendications précédentes, **caractérisé en ce que** les moyens de cadenassage (4) sont constitués par des câbles (20) munis à une de leurs extrémités d'un organe de fixation (21) destiné à être fixé dans l'enceinte longitudinale (9) et à son autre extrémité d'une boucle de cadenassage (22).

8. Dispositif de parcage de véhicules (1) selon la revendication 1, **caractérisé en ce que** le support principal (2) est constitué par deux poteaux de soutien (8a, 8b) latéraux destinés à être ancrés ou scellés sur le sol ou dans un mur et entre lesquels est fixé le rail transversal de maintien (5) muni des moyens de parcage (3) et/ou des moyens de cadenassage (4) grâce à un dispositif de verrouillage (23).

## Patentansprüche

1. Vorrichtung zum Abstellen von Fahrzeugen (1), insbesondere von Fahrrädern (24) umfassend mindestens einen Hauptständer (2), auf dem die Mittel zum Abstellen von Fahrzeugen (3) und/oder die Mittel zum Anschließen (4) angeordnet sind, wobei der Hauptständer (2) mindestens eine querverlaufende Halteschiene (5) mit einem längsverlaufenden Raum (9) aufweist, in dessen Innerem die Mittel zum Abstellen (3) und/oder die Mittel zum Anschließen (4) befestigt sind, **dadurch gekennzeichnet, dass** die querverlaufende Halteschiene (5) einen Längsspalt (13) einer Breite (L1) umfasst, der sich über die gesamte Länge derselben erstreckt, und dass die Mittel zum Abstellen und/oder zum Anschließen durch diesen Spalt hindurchgeführt werden.

2. Vorrichtung zum Abstellen von Fahrzeugen (1) nach Anspruch 1, **dadurch gekennzeichnet, dass** die Mittel zum Abstellen (3) und/oder die Mittel zum Anschließen (4) jeweils an einem Ende ein Befestigungselement (6, 21) aufweisen, das innerhalb des längsverlaufenden Raums (9) befestigbar ist.

3. Vorrichtung zum Abstellen von Fahrzeugen (1) nach Anspruch 2, **dadurch gekennzeichnet, dass** die Befestigungselemente (6, 21) der Mittel zum Abstellen (3) und/oder der Mittel zum Anschließen (4) aus einer im Wesentlichen parallelepipedförmigen Platte (6) bestehen, deren untere Grundfläche eine Breite (L2) bzw. eine Länge (L3) aufweist, die jeweils größer ist, als die Breite (L1) des Längsspalts (9).

4. Vorrichtung zum Abstellen von Fahrzeugen (1) nach Anspruch 2 oder 3, **dadurch gekennzeichnet, dass** sie Positionierungs- und Verriegelungsmittel (7) zur Positionierung und Verriegelung der Befestigungselemente (6, 21) der Mittel zum Abstellen (3) und/oder der Mittel zum Anschließen (4) innerhalb des längsverlaufenden Raums (9) umfasst.

5. Vorrichtung zum Abstellen von Fahrzeugen (1) nach Anspruch 4, **dadurch gekennzeichnet, dass** die Positionierungs- und Verriegelungsmittel aus innerhalb des längsverlaufenden Raums (9) der Schiene (5) angeordneten Passstücken (7) bestehen, die mit den Befestigungsorganen (6, 21), zwischen denen sie angeordnet sind, zusammenwirken sollen.

6. Vorrichtung zum Abstellen von Fahrzeugen (1) nach einem der vorstehenden Ansprüche, **dadurch gekennzeichnet, dass** die Mittel zum Abstellen (3) von Fahrzeugen aus Lenkstangenhaltern (15, 15a, 15b) bestehen, welche einen länglichen Teil (19) aufweisen, der sich im Wesentlichen horizontal in einer senkrecht zur Längsachse (XX') der Halteschiene (5) verlaufenden Ebene erstreckt, wobei der längliche Teil (19) auf seiner Oberseite mindestens eine Aussparung oder eine Einkerbung (17) aufweist, die mit einem Teil der Lenkstange (18) eines Fahrrades (24) zusammenwirken soll.

7. Vorrichtung zum Abstellen von Fahrzeugen (1) nach einem der vorstehenden Ansprüche, **dadurch gekennzeichnet, dass** die Mittel zum Anschließen (4) aus Kabeln (20) bestehen, die an einem ihrer Enden mit einem in dem längsverlaufenden Raum (9) befestigbaren Befestigungselement (21) und an ihrem anderen Ende mit einer Anschließschlaufe (22) versehen sind.

8. Vorrichtung zum Abstellen von Fahrzeugen (1) nach Anspruch 1, **dadurch gekennzeichnet, dass** der Hauptständer (2) aus zwei seitlichen Standrohren (8a, 8b) zur Verankerung oder Einbetonierung in den Boden oder in eine Wand besteht, zwischen denen die querverlaufende Halteschiene (5) mit den Mitteln zum Abstellen (3) und/oder den Mitteln zum Anschließen (4) mittels einer Verriegelungsvorrichtung (23) befestigt ist.

## Claims

1. Device for parking vehicles (1), in particular cycles (24), of the type comprising at least one main support (2) intended to carry the vehicle parking means (3) and/or padlocking means (4), the said main support (2) comprising at least one transverse holding rail (5) having a longitudinal chamber (9) inside which the parking means (3) and/or the padlocking means (4) are fixed, **characterised in that** the transverse holding rail (5) has a longitudinal slot (13) with a width (L1) extending over the whole of its length, and **in that** the said parking and/or padlocking means pass through this slot.

2. Vehicle parking device (1) according to any one of the preceding claims, **characterised in that** the parking means (3) and/or the padlocking means (4) each have at one of their ends a fixing member (6, 21) intended to be fixed inside the longitudinal chamber (9).

3. Vehicle parking device (1) according to Claim 2, **characterised in that** the fixing members (6, 21) of the parking means (3) and/or of the padlocking means (4) consist of a plate (6) with a substantially parallelepipedal shape, whose bottom base is of a width (L2) and length (L3) respectively greater than the width (L1) of the longitudinal slot (9).

4. Vehicle parking device (1) according to Claim 2 or 3, **characterised in that** it comprises positioning and locking means (7) intended to position and lock the fixing members (6, 21) of the parking (3) and/or padlocking (4) means inside the longitudinal chamber (9).

5. Vehicle parking device (1) according to Claim 4, **characterised in that** the positioning and locking means consist of wedges (7) disposed inside the longitudinal chamber (9) of the rail (5) and intended to cooperate with the fixing members (6, 21) between which they are fitted.

6. Vehicle parking device (1) according to any one of the preceding claims, **characterised in that** the vehicle parking means (3) consist of handlebar supports (15, 15a, 15b) having an elongate part (19) extending substantially horizontal in a plane perpendicular to the longitudinal axis (XX') of the holding rail (5), the said elongate part (19) having on its top face at least one recess or notch (17) intended to cooperate with a part of the handlebars (18) of a cycle (24).

7. Vehicle parking device (1) according to any one of the preceding claims, **characterised in that** the padlocking means (4) consist of cables (20) provided at one of their ends with a fixing member (21) intended to be fixed in the longitudinal chamber (9) and at the other end with a padlocking loop (22).

8. Vehicle parking device (1) according to Claim 1, **characterised in that** the main support (2) consists of two lateral support posts (8a, 8b) intended to be anchored or embedded on the ground or in a wall and between which there is fixed the transverse holding rail (5) provided with the parking means (3) and/or the padlocking means (4) by virtue of a locking device (23).
